Europäisches Patentamt

European Patent Office

Office européen des brevets

(11) Veröffentlichungsnummer: **0 423 913 A2**

## (12) EUROPÄISCHE PATENTANMELDUNG

(21) Anmeldenummer: **90250262.4**

(22) Anmeldetag: **11.10.90**

(51) Int. Cl.5: **G03B 21/46**, G03B 21/50

(30) Priorität: **14.10.89 DE 3934420**

(43) Veröffentlichungstag der Anmeldung:
**24.04.91 Patentblatt 91/17**

(84) Benannte Vertragsstaaten:
**AT CH DE FR GB IT LI**

(71) Anmelder: **ARNOLD & RICHTER CINE TECHNIK GMBH & CO. BETRIEBS KG.**
**Türkenstrasse 89**
**W-8000 München 40(DE)**

(72) Erfinder: **Haas, Josef**
**Siemensstrasse 14**
**A-1210 Wien(AT)**
Erfinder: **Tschida, Ernst**
**Bergheidengasse 8**
**A-1130 Wien(AT)**

(74) Vertreter: **Ninnemann, Detlef, Dipl.-Ing.**
**Patentanwälte Maikowski & Ninnemann**
**Xantener Strasse 10**
**W-1000 Berlin 15(DE)**

(54) **Verfahren und Vorrichtung zur Korrektur von Höhenbildstandsfehlern.**

(57) Verfahren zur Korrektur von Höhenbildstandsfehlern bei der Wiedergabe eines intermittierend transportierten, perforierten Laufbildfilmes mittels einer in die Filmperforation eingreifenden Filmtransportzahnrolle, die von einem Elektromotor angetrieben wird, dessen Läufer mit einer Winkelgebereinrichtung verbunden ist, die der Winkelstellung des Läufers entsprechende Positionssignale an eine den Elektromotor ansteuernde Regeleinrichtung abgibt. Zur Korrektur gerätespezifischer Höhenbildstandsfehler werden die Bildstandspositionen mit einem geometrisch exakten Meßfilm über eine Vielzahl Bilder gemessen, die jeweiligen Bildstandspositionen gespeichert und die Stellung der Winkelgeberscheibe um einen Korrekturwert gegenüber der Filmtransportzahnrolle verändert. Zur Korrektur betriebsabhängiger Höhenbildstandsfehler werden Fehlertabellen für im Projektionsbetrieb vorkommende Bildstandsfehler gespeichert, die Bildstandspositionen kontinuierlich gemessen und die erfaßten Meßwerte mit den in den Fehlertabellen gespeicherten Werten verglichen, eine die Meßwerte optimal repräsentierende Fehlertabelle ermittelt und eine zu dieser Fehlertabelle gehörige Korrekturtabelle ausgewählt, deren Korrekturwerte an die Regeleinrichtung abgegeben werden.

## VERFAHREN UND VORRICHTUNG ZUR KORREKTUR VON HÖHENBILDSTANDSFEHLERN

Die Erfindung betrifft Verfahren zur Korrektur von Höhenbildstandsfehlern bei der Wiedergabe von intermittierend transportierten, perforierten Laufbildfilmen nach dem Oberbegriff des Anspruchs 1 Filmtransportvorrichtungen zur Durchführung der Verfahren.

Aus der DE-PS 27 22 378 ist eine Filmtransportvorrichtung mit einer von einem Elektromotor intermittierend angetriebenen Filmtransportzahnrolle bekannt, deren Zähne in die Perforation des Filmes eingreifen und diesen schrittweise transportieren. Eine Steuervorrichtung steuert den Antriebsmotor der Filmtransportzahnrolle so an, daß dieser den Film um jeweils eine Bildbreite vorschiebt.

Der Filmtransport wird durch ein dem Antriebsmotor der Filmtransportzahnrolle zugeführtes Stromprofil bei jedem Bildschritt in eine Beschleunigungsphase, in eine Verzögerungsphase und in eine Positionsregel- bzw. Endpositionierungsphase unterteilt.

Zur Endpositionierung ist ein Markierungsdetektor vorgesehen, der in fester räumlicher Beziehung zu den einzelnen Filmbildern stehende Markierungen auf dem Film abtastet und daraus Steuersignale für den Antriebsmotor erzeugt, so daß der Film je nach Lage der Abweichung der filmfesten Markierung von einer vorgegebenen Sollwertposition weiter vorwärts oder rückwärts transportiert wird. Daran anschließend wird die Abweichung von der Sollwertposition erneut detektiert und ggf. das Endpositionieren des Films wiederholt, bis die Sollwertposition erreicht ist. Als filmfeste Markierung dienen die Perforationslöcher des Films oder auf den Film aufbelichtete Markierungen.

Aus der DE-OS 32 17 014 ist eine Filmtransportvorrichtung mit einem von einem Antriebsmotor angetriebenen Greiferschaltwerk bekannt, dessen Transport- und Sperrgreifer mit Spiel in die Perforation des Filmes eingreifen und den Film schrittweise um jeweils eine Bildbreite vorschieben und am Bildfenster endpositionieren. Die Endpositionierung der zu projizierenden Filmbilder erfolgt entweder unter Verwendung des wiederzugebenden Filmbildes selbst oder unter Verwendung einer dem Filmbild zugeordneten Referenzmarkierung.

Da jeder Bildschritt bei den bekannten Filmtransportvorrichtungen eine Zeitspanne von nur 10 Millisekunden benötigt, bleibt bei einer Bildfolge von 24 Bildern pro Sekunde, was etwa 41 Millisekunden entspricht, eine Zeit von 31 Millisekunden zur Belichtung bzw. Projektion eines Filmbildes, wodurch eine große Bildhelligkeit und Bildqualität sichergestellt wird.

Bei beiden bekannten Vorrichtungen zur Korrektur von Höhenbildstandsfehlern sind filmfeste Markierungen wie Perforationslöcher des Films oder auf den Film aufbelichtete Markierungen erforderlich, um Bildstandsabweichungen zu korrigieren und Bildsprünge zu vermeiden. Diese zusätzliche Positionierungshilfe in Form von filmfesten Markierungen ist erforderlich, obwohl die elektronische Positionierung einer Filmtransportzahnrolle wie beim Gegenstand der DE-PS 27 22 378 über eine Winkelgeberscheibe, einen Positionsregler und einen Gleichstromleistungsverstärker sehr genau möglich ist.

Trotz dieser elektromechanisch exakten Positionierung der Filmtransportzahnrolle und einer notwendigen kraftschlüssigen Kopplung zwischen den Zähnen der Filmtransportzahnrolle und den Perforationslöchern treten in der Praxis noch merkliche Bildstandsschwankungen auf. Diese sind zum einen auf fertigungstechnische Ungenauigkeiten der mechanischen Filmpositionierungselemente sowie auf betriebsabhängige Einflußgrößen wie Filmart, Abnutzung der Filmtransportzahnrolle, des den Film führenden Filmkanals, des Motorlagers sowie auf Verunreinigungen der Winkelgebereinrichtung zurückzuführen.

Die aus der DE-PS 27 22 378 sowie der DE-PS 32 17 014 bekannte Einzelbildkorrektur weist zudem den Nachteil auf, daß die filmfeste Markierung zur Einzelbildkorrektur sehr exakt erfaßt werden und auch bei häufigem Betrieb eindeutig identifizierbar sein muß. Verschiedene Störeinflüsse beeinträchtigen jedoch die Perforationslöcher des Films oder filmfester, auf den Film aufbelichteter Markierungen, da beispielsweise die Perforationslochkante aufgerauht, deformiert oder verschmutzt sein kann oder ein unterschiedlicher Reflektionsgrad eine aufbelichtete Markierung nur ungenau erkennen läßt.

Aufgabe der vorliegenden Erfinung ist es, Verfahren sowie Vorrichtungen zur Korrektur von Höhenbildstandsfehlern bei der Wiedergabe von intermittierend transportierten, perforierten Laufbildfilmen anzugeben, die Höhenbildstandsfehler auf einfache Weise ohne zusätzliche elektromechanische Nachpositionierungen minimieren und bei deren Anwendung die Erfassung filmfester Markierungen und deren durch äußere Störeinflüsse bedingte Meßungenauigkeiten nicht erforderlich ist.

Diese Aufgabe wird erfindungsgemäß dadurch gelöst, daß die Bildstandspositionen mit einem geometrisch exakten Meßfilm über eine Vielzahl Bilder gemessen, die jeweiligen Bildstandspositionene gespeichert und die Stellung der Winkelgebereinrichtung um einen Korrekturwert gegenüber der Filmtransportzahnrolle verändert wird.

Die erfindungsgemäße Lösung ermöglicht eine hochgenaue Positionierung der Filmbilder unter Ausschluß gerätespezifischer Bildstandsfehler, ohne daß Endpositionierungseinrichtungen und filmfeste Markierungen mit ihren möglichen Störeinflüssen erforderlich sind.

Der erfindungsgemäßen Lösung liegt die Überlegung zugrunde, daß die elektronische Positionierung der Filmtransportzahnrolle über eine Winkelgebereinrichtung, einen Positionsregler, einen Gleichstromleistungsverstärker und einen hochdynamischen Gleichstrommotor sehr genau möglich ist, wobei die exakte Übertragung der Endposition jedes Filmbildes durch ein langsames, aperiodisches Einziehen des Films gegen eine Filmreibkraft zu erreichen ist. Damit liegt der Film fest an der Zahnflanke·an, was wegen des unvermeidlichen Spiels zwischen Zahn und Perforierung notwendig ist.

Trotz dieser elektromechanischen exakten Positionierung der Filmtransportzahnrolle und der kraftschlüssigen Filmkopplung treten in der Praxis noch merkliche Bildstandsschwankungen auf. Wegen der sehr hohen Drehbeschleunigung der Filmtransportzahnrolle ist es aus physikalischen Gründen erforderlich, eine Filmtransportzahnrolle mit einem solchen Durchmesser zu verwenden, daß bereits ein Bruchteil einer Umdrehung einer Filmvorschubbewegung eines Bildes entspricht.

Durch fertigungstechnische Ungenauigkeiten der mechanischen Filmpositionierungselemente wie Winkelgebescheibe, Filmtransportzahnrolle und Exzentrizitäten des gemeinsamen Drehmittelpunktes werden die einzelnen Filmbilder innerhalb einer Umdrehung eine Abweichung von der Sollposition aufweisen. Bei jeder Umdrehung wird sich dieser Bildstandsfehler wiederholen.

Ist eine Umdrehung der Filmtransportzahnrolle mit der Projektion von n Bildern gleichzusetzen, so steht jedes n-te Bild wieder an derselben Position. Dieser periodischsystematische Fehler ist eine konstante, gerätespezifische Größe, die nachfolgend als gerätespezifischer Bildstandsfehler bezeichnet wird.

Da es sich um eine reproduzierbare Größe handelt, kann erfindungsgemäß durch einmalige Messung der Bildstandspositionen über eine größere Anzahl von Bildern beispielsweise durch einfache Perforationslesung mittels eines geometrisch exakten Meßfilmes, eine feste Speicherung z.B. in einem EPROM und eine Korrektur der Sollage um den entsprechenden Betrag der gerätespezifische Bildstandsfehler eliminiert werden.

Ein weiterer periodischer Fehler, der sich ebenfalls mit jedem n-ten Filmbild wiederholt, wobei n Filmbilder einer Umdrehung der Filmtransportzahnrolle entsprechen, besteht darin, daß aufgrund der Variation des Filmkanals zwischen der Filmtransportzahnrolle und einer Filmandruckkufe während einer Umdrehung, verursacht durch Unrundheiten und Exzentrizitäten von Motorwelle und Zahntrommel, der Film bei einer Umdrehung mehr oder weniger auf der Filmtransportzahnrolle aufliegt und somit auch auf einer unterschiedliche Höhe auf einer Zahnflanke der Filmtransportzahnrolle aufliegen kann.

Bei diesem nachstehend als zweiten periodischen Fehler bezeichneten weiteren Fehler handelt es sich jedoch nicht um eine konstante, gerätespezifische sondern um eine betriebsabhängige Größe.

Einflußgrößen auf diesen zweiten periodischen Fehler sind die Filmart, da sich beispielsweise ein dünner Film im Filmkanal mit mehr Spielraum bewegt als ein dicker Film, ein steiferer Film sich im variablen Filmkanal anders verhält als ein weicher Film, Abnutzungen an der Filmtransportzahnrolle, am Filmkanal und am Motorlager, Verschmutzungen der Winkelgebereinrichtung usw.

Ein Verfahren zur Korrektur des zweiten, möglichen periodischen Bildstandsfehlers besteht erfindungsgemäß darin, daß Fehlertabellen für im Projektionsbetrieb vorkommende Bildstandsfehler gespeichert werden, die Bildstandspositionen kontinuierlich oder zu frei wählbaren Zeitpunkten gemessen und die erfaßten Meßwerte mit den in den Fehlertabellen gespeicherten Werten verglichen und eine die Meßwerte optimal repräsentierende Fehlertabelle ermittelt und eine zu dieser Fehlertabelle gehörige Korrekturtabelle ausgewählt wird, deren Korrekturwerte an die Regeleinrichtung abgegeben werden.

Ein alternatives Verfahren zur Reduzierung des zweiten periodischen Fehlers besteht darin, daß die Bildstandsposi tionen kontinuierlich durch Erfassen einer filmfesten Markierung gemessen werden, mit den fortlaufenden Meßwerten eine gespeicherte Fehlertabelle fortlaufend korrigiert wird und die Abweichungen der Istwertpositionen des Bildstandes von einer die korrekte Bildstillstandsposition wiedergenden Sollwertvorgabe über eine Vielzahl Bilder summiert und die summierten Differenzwerte dividiert durch die Anzahl gemessener Werte als Mittelwert zur Korrektur der Regeleinrichtung zugeführt wird.

Mit beiden Verfahren können Höhenbildstandfehler auf sehr einfache Weise ausreichend minimiert werden, ohne daß zusätzliche elektromechanische Nachpositionierungseinrichtungen erforderlich sind, die zusätzlichen Störeinflüssen unterliegen.

Die ständige Messung der Bildpositionskorrektur erst nach Mittelung über mehrere Bilder oder ein Vergleich mit einer festen Fehlertabelle weist gegenüber einer Einzelbildkorrektur den wesentlichen Vorteil auf, daß die mit den verschiedenen Störeinflüssen behafteten Perforierungsmessungen oder Erfassungen filmfester Markierungen nicht direkt beim einzelnen Bild zur Endpositionierung herangezogen werden und somit praktisch durch die Ausmittelung der Fehler eine genauere Bildpositionierung möglich ist.

Schließlich kann das Verfahren zur Reduzierung des gerätespezifischen Bildstandsfehlers mit den beiden Verfahren zur Reduzierung des zweiten periodischen Fehlers kombiniert werden, so daß sowohl fertigungstechnische Ungenauigkeiten der mechanischen Filmpositionierungselemente als auch betriebsabhängige Größen bei der Endpositionierung der einzelnen Filmbilder berücksichtigt werden, so daß die auf diese Einflußgrößen zurückzuführenden Höhenbildstandsfehler ausreichend minimiert werden, ohne daß eine zusätzliche elektromechanische Nachpositionierungseinrichtung erforderlich ist, deren Genauigkeit von der Größe der Störeinflüsse bei der Perforierungsmessung oder Erfassung filmfester Markierungen abhängig ist.

Anhand eines in der Zeichnung dargestellten Ausführungsbeispieles soll der der Erfindung zugrundeliegende Gedanke näher erläutert werden. Es zeigen:

Figur 1 eine schematische Darstellung der einzelnen Antriebsteile eines Filmprojektors;

Figur 2 einen Querschnitt durch eine Filmtransporteinrichtung mit einer Filmtransportzahnrolle;

Figur 3 eine Draufsicht auf eine Winkelgeberscheibe einer Winkelgebereinrichtung;

Figur 4 eine zeitliche Darstellung des von der Winkelgebereinrichtung erfaßten Meßsignals;

Figur 5 eine schematische Darstellung der Abweichung der einzelnen Filmbilder von einer exakten Sollwertlage bei einer Umdrehung der Filmtransportzahnrolle;

Figur 6 ein Blockschaltbild der Speicherorganisation der Regeleinrichtung zur Positionierung der Filmtransportzahnrolle und

Figur 7 eine schematische Darstellung der Methode zur Korrektur eines zweiten periodischen Fehlers.

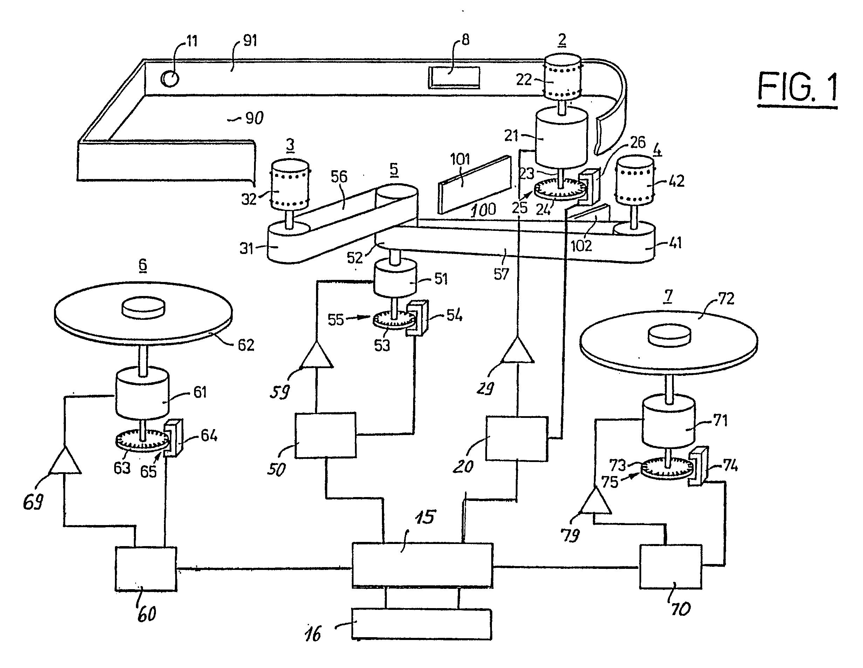

Die in Figur 1 dargestellte schematische perspektivische Ansicht der wesentlichen Antriebsteile des erfindungsgemäßen Filmprojektors zeigt die Filmtransporteinrichtung 2, die Vor- und Nachwickeleinrichtungen 3, 4, die von einer gemeinsamen Antriebseinrichtung 5 angetrieben werden, die die Filmspulen tragenden Wickeleinrichtungen 6, 7 sowie in vereinfachter schematischer perspektivischer Darstellung die zur Aufnahme der Filmschleifen zu beiden Seiten des Bildfensters 8 dienenden Filmschleifenkanäle 9, 10.

Die Filmtransporteinrichtung 2 enhält einen Hauptmotor 21, der aus einem hochdynamischen Gleichstromservomotor besteht, der seine Drehbewegung über eine direkt angetriebene Filmzahnrolle 22 auf den Film 1 überträgt. Über eine Welle 23 ist der Hauptmotor 21 fest mit einer Winkelgeberscheibe 24 eines Sensors 26 verbunden, der mittels einer opto-elektronischen Positions-Abtasteinrichtung 25 die exakte Stellung des Hauptmotors 21 erfaßt und weiterleitet.

Die Vor- und Nachwickeleinrichtungen 3, 4 enthalten eine Antriebswelle 31, 41, die fest mit je einer Zahntrommel 32, 42 verbunden sind und den eingelegten Film kontinuierlich transportieren. Die Antriebswellen 31, 41 sind über Riemen 56, 57 mit Antriebsrollen 52 der Antriebseinrichtung 5 verbunden, die über eine Welle starr mit einem Antriebsmotor 51 gekoppelt ist, der aus einem geregelten Gleichstrommotor besteht, dessen Drehzahl proportional zur eingestellten Bildfrequenz geregelt wird. Zur Drehzahlund Positionserfassung des Antriebsmotors 51 dient eine fest mit der Motorwelle verbundene Winkelgeberscheibe 53, die zusammen mit einer optoelektronischen Abtasteinrichtung 54 einen Sensor 55 bildet.

Die Wickeleinrichtungen 6, 7 zur Aufnahme der Filmspulen enthalten einen Wickelteller 62, 72, die über eine Welle mit je einem Wickelmotor 61, 71 verbunden sind, der als Gleichstrommotor ausgebildet ist. Zur Drehzahl- und Drehrichtungserfassung der Wickelmotoren 61, 71 dient eine fest mit der Welle des jeweiligen Wickelmotors 61, 71 verbundene Winkelgeberscheibe 63, 73, die zusammen mit einer optoelektronischen Abtasteinrichtung 64, 74 eine Sensoreinrichtung 65, 75 bildet.

Die Filmschleifenkanäle 9, 10 dienen zur Aufnahme der zu beiden Seiten des Bildfensters 8 gebildeten Filmschleifen, wobei im vorliegenden Fall aufgrund der speziellen Ausgestaltung der Steuer- und Regeleinrichtung nur eine Schleifenmeßeinrichtung 11 in dem links vom Bildfenster 8 angeordneten Filmschleifenkanal 9 vorgesehen ist. Die Schleifenmeßeinrichtung 11 kann aus einer Reflexionslichtschranke oder einer Leuchtdiode in Verbindung mit einem gegenüberliegenden Fototransistor bestehen.

Die Wickelteller 62, 72 dienen zur Aufnahme der Filmspulen, wobei der Film wahlweise vom linken Wickelteller 62 abgewickelt und durch den nachstehend beschriebenen Filmkanal zum rechten Wickelteller 72 oder umgekehrt bewegt werden kann. Nach Wahl des Benutzers kann der Film 1 auch in beliebiger Weise auf die Wickelteller 62, 72 aufgelegt werden.

Zwischen den Vor- und Nachwickeleinrichtungen 3, 4 ist das Bildfenster 8 und die Filmtransporteinrichtung 2 mit der Filmzahnrolle 22 angeordnet. Das Bildfenster 8 ist Teil einer Filmanlegeschiene, die im Bereich der Filmzahnrolle 22 eine gebogene Filmkufe aufweist, deren Krümmung dem Durchmesser der Filmzahnrolle 22 angepaßt ist.

Ein übergeordnetes Steuer-, Regel- und Überwachungssystem 15 ist mit einer Eingabetastatur 16 zur Eingabe gewünschter Filmprojektorfunktionen wie Bildtransport vorwärts und rückwärts mit variabler Transportgeschwindigkeit, Suchlauf, schneller Vor- und Rücklauf oder dergleichen verbunden. Sie weist vorzugsweise einen Mikroprozessor auf, der mit einem Speicher zur Speicherung beliebiger Funktionen des Filmprojektors verbunden ist.

Das übergeordnete Steuer-, Regel- und Überwachungssystem 15 ist ausgangsseitig mit den elektronischen Steuer- und Regelteilen 20, 50, 60, 70 für die einzelnen Antriebsteile des Filmprojektors verbunden. Die Ausgänge der elektronischen Steuer- und Regelteile 20, 50, 60, 70 sind über nachgeschaltete Gleichstrom-Leistungsverstärker 29, 59, 69, 79 mit dem Hauptmotor 21 der Filmtransporteinrichtung 2, dem Antriebsmotor 51 der Antriebseinrichtung 5 sowie dem linken Wickelmotor 61 und rechten Wickelmotor 71 der beiden Wickeleinrichtungen 6, 7 verbunden.

Die mit den Motorwellen gekoppelten Sensoren 25 und 55 des Hauptmotors 21 und des Antriebsmotors 51 geben entspre chende Positions-, Drehzahl- und/oder Drehrichtungssignale an die Eingänge der zugeordneten Steuer- und Regelteile 20, 50 sowie an das übergeordnete Steuer-, Regel- und Überwachungssystem ab. Die mit den Motorwellen der Wickelmotoren 61, 71 gekoppelten Sensoren 65, 75 geben Ausgangssignale ausschließlich an jeweils einen Eingang des übergeordneten Steuer-, Regel- und Überwachungssystems 15 ab.

Das von der Schleifenmeßeinrichtung abgegebene Signal wird ebenfalls an einen Eingang des Steuer-, Regel- und Überwachungssystems 15 gelegt.

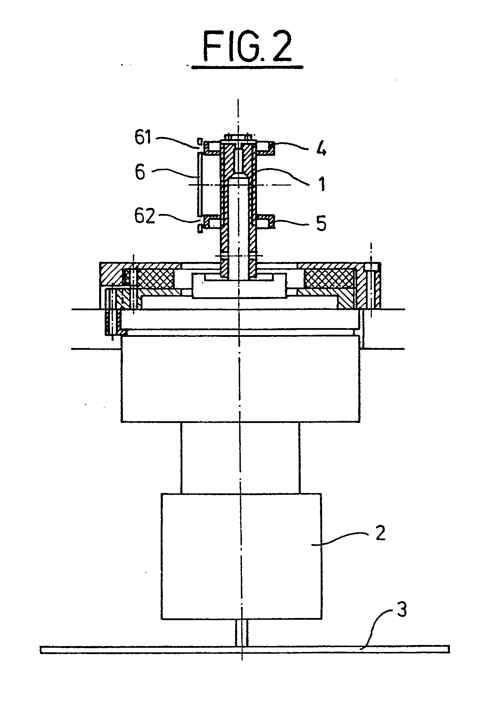

Der in Figur 2 dargestellte Querschnitt durch eine Filmtransporteinrichtung zeigt eine mit 2 Zahnkränze 4, 5 versehene Filmtransportzahnrolle, die fest mit der Welle eines Antriebsmotors 2 gekoppelt ist, auf dessen Welle auch eine Winkelgeberscheibe 3 zur exakten Positionierung des Antriebsmotors 2 angeordnet ist. Der obere und untere Zahnkranz 4, 5 der Filmtransportzahnrolle 1 greift in entsprechende Perforationsreihen 61, 62 eines Films 6 ein, wobei der Eingriff durch eine nicht näher dargestellte Führung in Form einer Filmkufe oder dergleichen herbeigeführt wird.

Dabei erfolgt der Eingriff der Zähne der Filmtransportzahnrolle in die Filmperforation über einen von der Filmbahn abhängigen Umfangsbereich der Filmtranportzahnrolle, so daß mehrere Zähne jedes Zahnkranzes 4, 5 der Filmtransportzahnrolle 1 gleichzeitig in entsprechende Perforationslöcher der Filmperforation eingreifen. Üblicherweise greifen gleichzeitig 4 bis 6 Zähne der Filmtransportzahnrolle 1 in die Filmperforation ein.

Der Eingriff der Zähne der Filmtransportzahnrolle 1 in die Filmperforation erfolgt dabei unter Einhaltung eines bestimmten Spiels, d.h., die Zahndicke der Zähne der Filmtransportzahnrolle 1 ist geringer als die Perforationsweite. Auf diese Weise wird vermieden, daß die Zähne der Filmtransportzahnrolle 1 an den Perforationsflanken beidseitig anliegen, was wegen der Filmspannung zu einer Beschädigung der Filmperforation und zu einem erhöhten Geräuschpegel führen würde.

Dieses Spiel zwischen den Zähnen der Filmtransportzahnrolle 1 und der Filmperforation führt aber auch bei Einhaltung einer vorbestimmten Filmspannung zu ungenauer Positionierung der einzelnen Filmbilder vor dem Bildfenster 8, so daß der Vorteil einer exakten Positionierung mit Hilfe eines Winkelgebersystems für den Antriebsmotor 2 durch diese ungenaue Führung des Films 6 beseitigt wird.

Um die genaue Positionierung des Films, die durch die Verwendung eines Antriebsmotors für die Filmtransportzahnrolle mit einem Winkelgebersystem geschaffen wird, auf die Positionierung des Films vor dem Bildfenster zu übertragen, wird die Bewegung des Films 6 vor der Projektion eines Filmbildes so eingestellt, daß die in Drehrichtung der Filmtransportzahnrolle 1 vordere Flanke eines Zahns 10 bis 14 der Filmtransportzahnrolle 1 an der Vorderkante mindestens eines Perforationslochs der Filmperforation im Augenblick der Projektion eines Filmbildes anliegt.

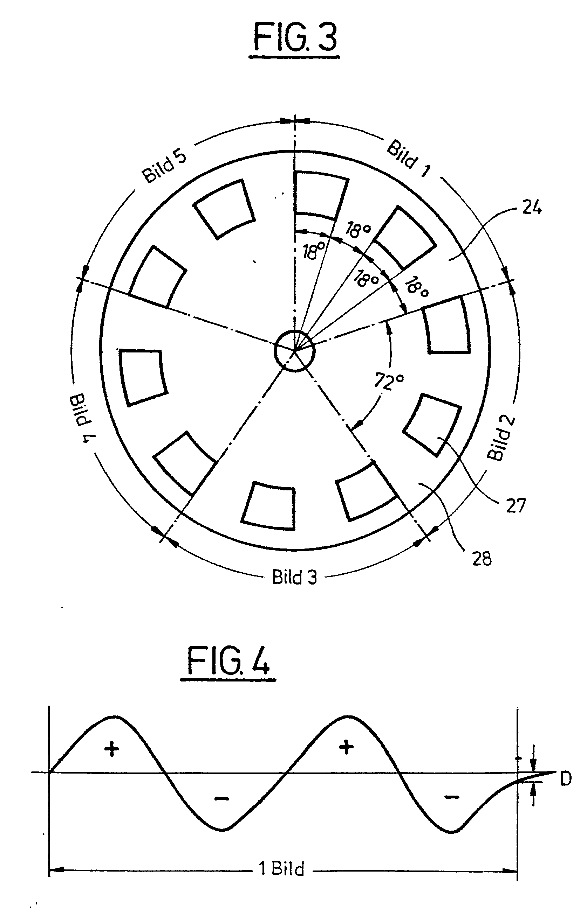

Figur 3 zeigt eine Draufsicht auf eine Winkelgeberscheibe 24 zur Bestückung des Wellendrehwinkels mittels einer pho toelektronischen Abtasteinrichtung, die aus einer Lichtquelle und einem Lichtsensor besteht, die auf beiden Seiten der Winkelgeberscheibe 24 im Bereich der Schlitze bzw. Öffnungen 25 und der dazwischen befindlichen Stege 26 angeordnet sind.

Die in Figur 3 dargestellte Winkelgeberscheibe 24 weist zehn Öffnungen 25 sowie zehn dazwischen befindliche Stege 26 auf. Ein Drehwinkel von 72° entsprechend zwei Öffnungen 25 und zwei Stegen 26 entspricht dem Filmtransport eines Filmbildes, so daß bei einer vollständigen Umdrehung der Winkelgeberscheibe 24 fünf Bilder positioniert werden.

Durch entsprechende Positionierung der Lichtquelle und des Lichtsensors der Winkelgebereinrichtung wird beispielsweise dann, wenn die Lichtstrahlmitte an einer Kante einer Öffnung 25 anliegt, ein Bild auf dem Film gegenüber dem Bildfenster 8 gemäß Figur 1 zentriert ist. In dieser Stellung fällt die Hälfte des Lichtstrahles durch die Öffnung 25, während die andere Hälfte durch einen Steg 26 der Winkelgeberscheibe 24 abgedeckt ist. In dieser Position ist der an den Lichtsensor angeschlossene Gleichstromleistungsverstärker 29 auf ein Null-Ausgangssignal justiert.

Sobald der Elektromotor 21 gemäß Figur 1 die Winkelgeberscheibe 24 dreht, erzeugt der Gleichstromleistungsverstärker 29 ein in Figur 4 dargestelltes annähernd sinusförmiges Ausgangssignal, das aus jeweils zwei positiven und zwei negativen Halbwellen besteht.

Wie der zeitlichen Darstellung gemäß der Figur 4 zu entnehmen ist, tritt am Ende eines Bildschrittes infolge fer tigungstechnischer Ungenauigkeiten der Winkelgeberscheibe, der Filmtransportzahnrolle sowie aufgrund von Exzentrizitäten der Motorwelle eine Abweichung des Filmbildes beim Bildstand von der Sollwertposition auf. Dieser Fehler wiederholt sich bei jeder Umdrehung der Filmtransportzahnrolle.

Bei Verwendung einer Winkelgeberscheibe gemäß Figur 3, der fünf Filmbilder bei einer Umdrehung der Winkelgeberscheibe positioniert werden, steht somit jedes fünfte Bild wieder an derselben Position. Diese Abweichung der Istposition jedes Filmbildes von der korrekten Sollposition ist darauf zurückzuführen, daß mit der Positionierungseinrichtung letztendlich nicht korrekt das Bild vor dem Bildfenster sondern die Winkelgeberscheibe positioniert wird, so daß mechanische Abweichungen zwischen der Winkelgeberscheibe und der Filmtransportzahnrolle bei definierter Anlage des Film an den Zähnen der Filmtransportzahnrolle zu Höhenbildstandsfehlern führen müssen.

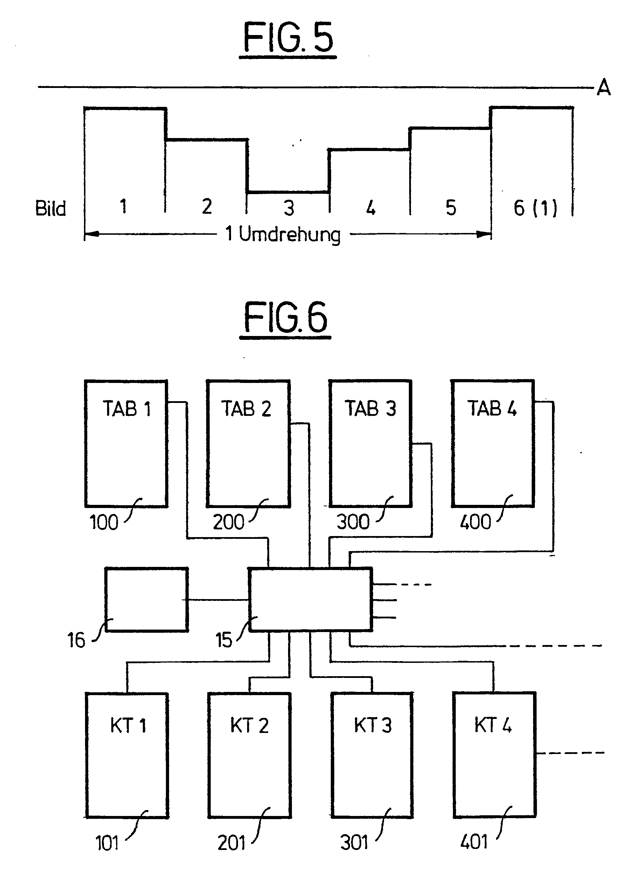

Figur 5 zeigt in schematischer Darstellung die Abweichungen der einzelnen Bildstandspositionen der Filmbilder 1 bis 5 bei einer Umdrehung der Filmtransportzahnrolle von einer Sollwertposition A, die der korrekten Positionierung eines Filmbildes vor dem Bildfenster entspricht.

Diese in Figur 5 völlig unterschiedlichen Abweichungen, die jedoch teilweise auch miteinander übereinstimmen können, werden erfindungsgemäß mit einem äußerst exakten Meßfilm, der geometrische Filmfehler ausschließt, über eine Vielzahl von Bildern beispielsweise durch eine Perfora tionslesung einmalig gemessen und in einem projektoreigenen Speicher, beispielsweise einem EPROM, abgespeichert. Die Messung erfolgt dabei in beiden Drehrichtungen der Filmtransportvorrichtung, so daß beispielsweise bei einer Filmtransportzahnrolle mit am Umfang gleichmäßig verteilten zwanzig Zähnen vierzig Korrekturwerte gespeichert werden.

Bei der Projektion eines beliebigen Filmes wird dann bei jeder Projektion eines Filmbildes der betreffende Wert abgerufen und als Sollwertkorrektur vorgegeben, so daß eine Endpositionierung des betreffenden Filmbildes um diesen Korrekturwert erfolgt.

Bildlich ausgedrückt wird die Winkelgeberscheibe bei jeder Positionierung eines Filmbildes um einen vorgegebenen Betrag versetzt, so daß die Sensoreinrichtung eine exakte Positionierung erfaßt und den Film stillsetzt. Auf diese Weise werden gerätespezifische Ungenauigkeiten und daraus resultierende gerätespezifische Bildstandsfehler für jedes Filmbild eliminiert und eine exakte Bildpositionierung sichergestellt.

Der zweite periodische, betriebsabhängige Fehler, der ebenfalls wiederholend mit jedem fünften Filmbild auftritt, ist auf Variationen des Filmkanals zwischen der Filmtransportzahnrolle und der Filmandruckkufe während einer Umdrehung verursacht durch Unrundheiten und Exzentrizitäten von Motorwelle und Filmtransportzahnrolle zurückzuführen und wird von der Filmart (dünner/dicker Film, steifer/weicher Film), Abnutzungserscheinungen von Film transportzahnrolle, Filmkanal und Motorlager, Verschmut zung der Winkelgeberscheibe usw. beeinflußt.

Zur Verringerung dieses Höhenbildstandsfehlers wird eine zusätzliche Bildstandskorrektur durchgeführt, die auf zwei Arten erfolgen kann.

In einem ersten Verfahren zur Minimierung des betriebsabhängigen Höhenbildstandsfehlers werden für die verschiedenen im Betrieb vorkommenden Fälle, beispielsweise abhängig von den verschiedenen Filmarten, Fehlertabellen gespeichert. Durch ständiges Messen der Filmstillstandspositionen und Vergleichen der ermittelten Abweichungen von einer gewünschten Sollwertposition mit den gespeicherten Fehlertabellen wird eine Fehlertabelle ermittelt, die mit den gemessenen Werten am meisten übereinstimmt. Eine dieser Fehlertabelle zugeordnete Korrekturtabelle wird dann als optimale Korrekturtabelle ermittelt und zur Korrektur der Bildpositionierung herangezogen.

Figur 6 zeigt schematisch die Speicherorganisation in Verbindung mit einer übergeordneten Steuer- und Regeleinrichtung, die vorzugsweise als Prozessor ausgebildet ist. Der dem Prozessor 15 zugeordnete Speicher enthält eine Vielzahl von Tabellen 100 bis 400, die unterschiedliche, im Betrieb vorkommende Fehler enthalten. Diese Fehler können beispielsweise vom Filmtyp abhängen.

Eine mit dem Prozessor 15 verbundene Meßeinrichtung 16 erfaßt ständig die Filmstillstandspositionen und gibt die erfaßten Werte an den Prozessor 15 ab. Dieser führt einen Vergleich der erfaßten Meßwerte mit den in den verschiedenen Tabellen 100 bis 400 gespeicherten Werten durch und ermittelt auf diese Weise diejenige Fehlertabelle, die den durch die Meßeinrichtung 16 erfaßten Abweichungen am nächsten kommt.

Eine zu der betreffenden Fehlertabelle gehörende Korrekturtabelle 101 bis 401 wird anschließend vom Prozessor 15 als optimale Korrekturtabelle ausgewählt und zur Korrektur der Bildpositionierung herangezogen, indem bildlich gesprochen die Winkelgeberscheibe bei jeder Bildpositionierung entsprechend verschoben wird.

In einem alternativen Verfahren zur Korrektur betriebsabhängiger Höhenbildstandsfehler werden die Stillstandspositionen der Filmbilder durch eine Perforierungslesung ständig gemessen und eine eingespeicherte Fehlertabelle fortlaufend korrigiert. Die gemessenen Ungenauigkeiten werden über eine Vielzahl von Bildern summiert und durch die Anzahl der gemessenen Bilder subtrahiert, so daß ein Mittelwert zur Korrektur dem Positionsregler zugeführt wird.

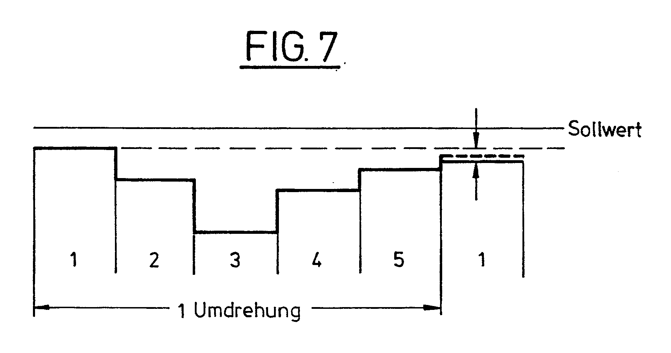

Figur 7 zeigt in schematischer Darstellung die Mittelung der Bildpositionierung über eine Vielzahl gemessener Bilder, indem eine Lageabweichung des zu positionierenden Filmbildes bei einer vollen Umdrehung der Filmtransportzahnrolle entsprechend der gestrichelten Darstellung gemittelt wird.

Mit einer Kombination der Bildstandskorrektur gemäß Figur mit der Bildstandskorrektur gemäß den Figuren 6 oder 7 können somit Höhenbildstandsfehler optimal korrigiert werden ohne daß zusätzliche, mit zusätzlichen Fehlern behaftete elektromechanische Nachpositionierungseinrichtungen erforderlich sind. Insbesondere wird eine ungenaue Perforantionslesung vermieden, so daß bei der Projektion eines Films mit stark schwankenden Perforationslochabständen nicht zusätzliche Fehler bei der Höhenbildstandspositionierung infolge einer ungenauen Perforationsmessung hinzugefügt werden.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch machen. Insbesondere beschränkt sich die Ausführung nicht auf die Realisierung mit diskreten logischen Baugruppen, sondern läßt sich vorteilhaft auch mit programmierter Logik - vorzugsweise unter Verwendung eines Mikroprozessors - realisieren.

**Ansprüche**

1. Verfahren zur Korrektur von Höhenbildstandsfehlern bei der Wiedergabe eines intermittierend transportierten, perforierten Laufbildfilmes mittels einer in die Filmperforation eingreifenden Filmtransportzahnrolle, die von einem Elektromotor angetrieben wird, dessen Läufer mit einer Winkelgebereinrichtung verbunden ist, die der Winkelstellung des Läufers entsprechende Positionssignale an eine den Elektromotor ansteuernde Regeleinrichtung abgibt,
**dadurch gekennzeichnet,**
daß die Bildstandspositionen mit einem geometrisch exakten Meßfilm über eine Vielzahl Bilder gemessen, die jeweiligen Bildstandspositionen gespeichert und die Stellung der Winkelgeberscheibe (24) um einen Korrekturwert gegenüber der Filmtransportzahnrolle (22) verändert werden.

2. Verfahren nach Anspruch 1, **dadurch gekennzeichnet,** daß der Korrekturwert dem bleibenden Abstand dse Höhenbildstandes von einer korrekten Sollwertlage entspricht.

3. Verfahren nach Anspruch 1 oder 2, **dadurch gekennzeichnet,** daß die Höhenbildstandsabweichungen in einem Festwertspeicher (16) der Regeleinrichtung (15) gespeichert und die Sollwertlage jedes Ein zelbildes entsprechend dem gespeicherten Wert korrigiert wird.

4. Verfahren zur Korrektur von Höhenbildstandsfehlern bei der Wiedergabe eines intermittierend transportierten, perforierten Laufbildfilmes mittels einer in die Filmperforation eingreifenden Filmtransportzahnrolle, die von einem Elektromotor angetrieben wird, dessen Läufer mit einer Winkelgebereinrichtung verbunden ist, die der Winkelstellung des Läufers entsprechende Positionssignale an eine den Elektromotor ansteuernde Regeleinrichtung abgibt,
**dadurch gekennzeichnet,**
daß Fehlertabellen (100 bis 400) für im Projektionsbetrieb vorkommende Bildstandsfehler gespeichert werden,
daß die Bildstandspositionen gemessen und die erfaßten Meßwerte mit den in den Fehlertabellen (100 bis 400) gespeicherten Werten verglichen werden,
und daß eine die Meßwerte optimal repräsentierende Fehlertabelle (100 bzw. 200 bzw. 300 bzw. 400) ermittelt und eine zu dieser Fehlertabelle gehörige Korrekturtabelle (101 bis 401) ausgewählt wird, deren Korrekturwerte an die Regeleinrichtung (15) abgegeben werden.

5. Filmtransportvorrichtung zur Durchführung des Verfahrens nach Anspruch 4, **gekennzeichnet durch** einen Fehlertabellen (100 bis 400) speichernden Lesespeicher, eine Bildstands-Meßeinrichtung zur Erfassung der Lage eines Filmbildes bei dessen Projektion, einem Sollwertgeber zur Vorgabe eines Sollwertes für eine exakte Bildstandsposition, einem Differenzbildner zur Abgabe eines die Abweichung der Istwertposition des Bildstandes von der vom Sollwertgeber abgegebenen Sollwertposition, einer Vergleichseinrichtung, die die vom Differenzbildner abgegebenen Werte mit den Werten der im Lesespeicher gespeicherten Fehlertabellen vergleicht und für jede Übereinstimmung ein Signal an eine Auswahleinrichtung abgibt, die bei maximal übereinstimmenden Werten der nacheinander durchgeführten Vergleiche eine Korrekturtabelle zur Bild-Stillstandspositionierung auswählt.

6. Verfahren zur Korrektur von Höhenbildstandsfehlern bei der Wiedergabe eines intermittierend transportierten, perforierten Laufbildfilmes mittels einer in die Filmperforation eingreifenden Filmtransportzahnrolle, die von einem Elektromotor angetrieben wird, dessen Läufer mit einer Winkelgebereinrichtung verbunden ist, die der Winkelstellung des Läufers entsprechende Positionssignale an eine den Elektromotor ansteuernde Regeleinrichtung abgibt,

**dadurch gekennzeichnet,**

daß die Bildstandspositionen kontinuierlich durch Erfassen einer filmfesten Markierung gemessen werden,

daß mit den fortlaufenden Meßwerten eine gespeicherte Fehlertabelle fortlaufend korrigiert wird und daß die Abweichungen der Istwertpositionen des Bildstandes von einer die korrekte Bildstillstandsposition wiedergenden Sollwertvorgabe über eine Vielzahl Bilder summiert und die summierten Differenzwerte dividiert durch die Anzahl gemessener Werte als Mittelwert zur Korrektur der Regeleinrichtung (15) zugeführt wird.

7. Verfahren zur Korrektur von Höhenbildstandsfehlern bei der Wiedergabe eines intermittierend transportierten, perforierten Laufbildfilmes mittels einer in die Filmperforation eingreifenden Filmtransportzahnrolle, die von einem Elektromotor angetrieben wird, dessen Läufer mit einer Winkelgebereinrichtung verbunden ist, die der Winkelstellung des Läufers entsprechende Positionssignale an eine den Elektromotor ansteuernde Regeleinrichtung abgibt,

**dadurch gekennzeichnet,**

daß die Bildstandspositionen mit einem Meßfilm über eine Vielzahl Bilder gemessen, die jeweiligen Bildstandspositionen gespeichert und die Stellung der Winkelgebereinrichtung um einen Korrekturwert gegenüber der Filmtransportzahnrolle verändert wird,

daß Fehlertabellen für im Projektionsbetrieb vorkommende Bildstandsfehler gespeichert werden,

daß die Bildstandspositionen kontinuierlich gemessen und die erfaßten Meßwerte mit den in den Fehlertabellen gespeicherten Werten verglichen werden,

und daß eine die Meßwerte optimal repräsentierende Fehlertabelle ermittelt und eine zu dieser Fehlertabelle gehörige Korrekturtabelle ausgewählt wird, deren Korrekturwerte an die Regeleinrichtung abgegeben werden.

8. Verfahren zur Korrektur von Höhenbildstandsfehlern bei der Wiedergabe eines intermittierend transportierten, perforierten Laufbildfilmes mittels einer in die Filmperforation eingreifenden Filmtransportzahnrolle, die von einem Elektromotor angetrieben wird, dessen Läufer mit einer Winkelgebereinrichtung verbunden ist, die der Winkelstellung des Läufers entsprechende Positionssignale an eine den Elektromotor ansteuernde Regeleinrichtung abgibt,

**dadurch gekennzeichnet,**

daß die Bildstandspositionen mit einem Meßfilm über eine Vielzahl Bilder gemessen, die jeweiligen Bildstandspositionen gespeichert und die Stellung der Winkelgebereinrichtung um einen Korrekturwert gegenüber der Filmtransportzahnrolle verändert wird,

daß die Bildstandspositionen kontinuierlich durch Erfassen einer filmfesten Markierung gemessen werden,

daß mit den fortlaufenden Meßwerten eine gespeicherte Fehlertabelle fortlaufend korrigiert wird und daß die Abweichungen der Istwertpositionen des Bildstandes von einer die korrekte Bildstillstandsposition wiedergebenden Sollwertvorgabe über eine Vielzahl Bilder summiert und die summierten Differenzwerte dividiert durch die Anzahl gemessener Werte als Mittelwert zur Korrektur der Regeleinrichtung zugeführt wird.

FIG. 1

# FIG.2

## FIG. 3

## FIG. 4

# FIG.5

Bild | 1 | 2 | 3 | 4 | 5 | 6 (1)

1 Umdrehung

# FIG.6

# FIG. 7